# EUROPÄISCHE PATENTSCHRIFT

(11) **EP 2 995 507 B1**
(45) Veröffentlichungstag und Bekanntmachung des Hinweises auf die Patenterteilung: **16.11.2016**
(21) Anmeldenummer: 14306407.9
(22) Anmeldetag: 12.09.2014
(51) Int. Cl.: H01R 35/02, B60R 16/02, H02G 15/013

(54) **Verfahren zum Montieren einer Anordnung zwischen der Karosserie und einer Tür eines Kraftfahrzeugs**
Method for mounting an assembly between coach and door of a motor vehicle
Procédé du montage d'un agencement entre la carrosserie et la portière d'un véhicule automobile

(43) Veröffentlichungstag der Anmeldung: 16.03.2016
(73) Patentinhaber: Nexans, 75008 Paris (FR)
(72) Erfinder: Teicher, Hermann, 92702 Kohlberg (DE); Lindner, Gerhard, 95703 Plößberg (DE); Steinberg, Helmut, 92721 Störnstein (DE)
(74) Vertreter: Feray, Valérie

(56) Entgegenhaltungen:
- WO-A1-01/89044
- WO-A1-2009/011624
- DE-B3- 10 259 980
- US-B1- 7 020 931
- US-B1- 7 943 854

## Beschreibung

Die Erfindung bezieht sich auf ein Verfahren gemäß dem Oberbegriff des Patentanspruchs.

Ein solches Verfahren geht beispielsweise aus der WO 2009/011624 A1 hervor.

In einem Kraftfahrzeug - im Folgenden kurz "Fahrzeug" genannt - vorhandene elektrische Elemente oder Geräte sind aktive oder passive Bauteile, welche mit elektrischem Strom versorgt werden müssen und/oder welche Signale empfangen oder senden. Zu den elektrischen Elementen zählen beispielsweise Leuchtdioden in Scheinwerfern und Rückleuchten, Motoren zum Heben und Senken der Fenster sowie zur Rückspiegelsteuerung, Beleuchtungen des Armaturenbretts, Sensoren und Steuergeräte. Die elektrischen Elemente werden in bekannter Weise mittels elektrischer Leitungen, welche zu Kabelsätzen zusammengefaßt sind, mit einer in der Karosserie des Fahrzeugs angeordneten Zentraleinheit verbunden. Die Zentraleinheit umfaßt eine Spannungsquelle, beispielsweise eine Gleichstrombatterie, und kann weiterhin Signalquellen, beispielsweise einen Prozessor (central processing unit, CPU), und/oder Steuerelemente aufweisen.

Die an oder in den Türen eines Fahrzeugs angeordneten elektrischen Geräte müssen mittels Kabelsätzen mit der Zentraleinheit in der Karosserie des Fahrzeugs verbunden werden. Dabei muß ein die nötigen elektrischen Leitungen enthaltender Kabelsatz den Freiraum zwischen der Karosserie und der Tür überbrücken. Im Allgemeinen wird der von einem Dichtungsschlauch umgebene Kabelsatz in dem Freiraum annähernd senkrecht zur Drehachse einer Tür positioniert. Durch das Öffnen und Schließen der Türen werden
die elektrischen Leitungen in dem Dichtungsschlauch hin- und herbewegt und aus der Tür bzw. der Karosserie herausgezogen bzw. in diese hineingeschoben. Dieses Strecken und Stauchen stellt eine Druck- und Zugbeanspruchung dar, welche die Leitungen dauerhaft mechanisch belastet, wodurch sie beschädigt oder zerstört werden können. Außerdem wird der Dichtungsschlauch beim Bewegen der Tür ständig verbogen. Dadurch wird auch dieser stark mechanisch belastet, mit einer eingeschränkten Lebensdauer. Ein beschädigter Dichtungsschlauch kann zudem keine ordnungsgemäße Dichtfunktion mehr ausüben, wodurch insbesondere Feuchtigkeit und Schmutz zu dem Kabelsatz und zu den elektrischen Geräten gelangen kann.

Die US 7,943,854 B1 beschreibt einen aus balgenartigen Rohrstücken bestehenden Schutzkörper für Leitungen, der zwischen einer Tür und einer Karosserie eines Fahrzeugs angebracht werden kann. An den Enden des Schutzkörpers sind aus elastomerem Material bestehende Dichtelement angebracht, welche in Montageposition einerseits in die Tür und andererseits in die Karosserie eingreifen.

Aus der US 7,020,931 B1 geht eine Tülle zum Durchführen von Leitungen hervor, die an einer Karosserie eines Kraftfahrzeugs befestigt ist und mit um 90° gebogenem Verlauf bis zur Tür desselben ragt. Die Tülle ist rohrförmig ausgeführt. Für den Anschluß an der Tür des Kraftfahrzeugs ist an einem Ende der Tülle ein mit einer Dichtung versehener Anschlußkörper angebracht. Am anderen Ende der Tülle ist eine ebenfalls mit einer Dichtung versehene Erweiterung angeordnet, die in einer Öffnung der Karosserie des Kraftfahrzeugs befestigt werden kann.

In der eingangs erwähnten WO 2009/011624 A1 ist eine Schutzvorrichtung für elektrische Drähte beschrieben, die aus einem rohrartigen Kanal besteht, welcher zwischen zwei Scharnieren einer Tür eines Fahrzeugs angeordnet ist. Der Kanal hat zwei teleskopartig ineinander greifende Teile, von denen der eine Teil mit der Karosserie des Fahrzeugs auf eine nicht beschriebene Art und Weise verbunden ist. Die beiden Enden eines zwischen Tür und Karosserie angeordneten Kabelsatzes sind um etwa 90° gebogen. Sie ragen ohne Befestigungspunkte sowohl in die Tür als auch in die Karosserie eines Fahrzeugs hinein. Um den jeweiligen gebogenen Bereich des Kabelsatzes sind im Kanal rohrartige Befestigungselemente angebracht, die ebenfalls um 90° gebogen verlaufen und den Kabelsatz umgeben.

Der Erfindung liegt die Aufgabe zugrunde, das eingangs geschilderte Verfahren so zu gestalten, daß die elektrischen Leitungen während der Bewegung einer Tür möglichst wenig mechanisch belastet werden und deren mediendichte Abdichtung und mechanischer Schutz in dem zu überbrückenden Zwischenraum stets gewährleistet bleiben.

Diese Aufgabe wird entsprechend den kennzeichnenden Merkmalen des Patentanspruchs gelöst.

In der mit diesem Verfahren montierten Anordnung liegen die elektrischen Leitungen des Kabelsatzes im Schwenkbereich zwischen der Karosserie und der Tür des Fahrzeugs parallel zur Drehachse der Tür. Die Mittelachse des Kabelsatzes entspricht dessen neutraler Faser. Sie stimmt annähernd mit der Drehachse der Tür über eine relativ lange Strecke überein. Dank der Übereinstimmung der neutralen Faser des Kabelsatzes mit der Drehachse der Tür und der Festlegung des Kabelsatzes in dem Schutzelement werden die elektrischen Leitungen beim Öffnen und Schließen der Tür keinen Druck- und Zugbelastungen ausgesetzt, und sie werden praktisch nicht verbogen. Es kommt lediglich zu einer geringfügigen Drehung bzw. Torsion der Leitungen. Der Torsionswinkel ist dabei auf den Öffnungswinkel der Tür beschränkt. Er beträgt beispielsweise im Falle der Fahrer- und Passagiertüren maximal 90° und für Schwenktüren, beispielsweise von Kleintransportern, ungefähr maximal 270°.

Das Schutzelement dient sowohl dem mechanischen Schutz als auch der mediendichten Abdichtung des Kabelsatzes in dem Zwischenraum zwischen Tür und Karosserie. Durch die Festlegung des Kabelsatzes in dem Schutzelement ist dieser
zusätzlich vor Zug- und Druckbelastungen geschützt. Auch das Schutzelement selbst unterliegt bei dieser Anordnung nur einer geringfügigen Torsion während des Öffnens und Schließens der Tür. Die Lebensdauer der gesamten Anordnung mit Kabelsatz und Schutzelement ist dadurch mit Vorteil wesentlich gegenüber bekannten Anordnungen erhöht.

Der Kabelsatz wird an der Tür und an der Karosserie des Fahrzeugs jeweils mittels eines Kupplungselements lösbar befestigt. Dies kann auf bekannte Weise mittels eines an dem Kabelsatz angebrachten Steckers und einer entsprechenden in der Tür oder der Karosserie angebrachten Buchse geschehen. Dadurch ist es beispielweise möglich, die

Tür des Fahrzeugs im Reparaturfall einfach aus- und wieder einzubauen, ohne das Schutzelement und den Kabelsatz komplett aus- und wieder einbauen zu müssen.

Ausführungsbeispiele des Erfindungsgegenstandes sind in den Zeichnungen dargestellt. Es zeigen:
Fig. 1 und Fig. 2 schematisch eine mit dem erfindungsgemäßen Verfahren montierte Anordnung, in perspektivischer Ansicht, angebracht zwischen einer Karosserie und einer Tür eines Fahrzeugs, in Ruhestellung einerseits und in geschwenkter Stellung andererseits.
Fig. 3 schematisch eine Anordnung nach den Fig. 1 oder 2 im Längsschnitt.
Fig. 4 schematisch einen Kabelsatz der Anordnung nach Fig. 3.
Fig. 5 schematisch ein Schutzelement der Anordnung nach Fig. 3 im Längsschnitt.

Das Verfahren nach der Erfindung wird im folgenden am Beispiel einer Fahrer- bzw. Passagiertür eines Fahrzeugs erläutert, stellvertretend für alle anderen Türen des Fahrzeugs. Die Tür kann mit einer Anzahl von Stromverbrauchern, beispielsweise Fensterhebern, Verriegelungsmechanismen und Warnleuchten, ausgestattet sein. Die Stromverbraucher werden in bekannter Weise über einen mit der Zentraleinheit des Fahrzeugs verbundenen Kabelsatz mit Strom versorgt, welcher eine dafür benötigte Anzahl von elektrischen Leitungen enthält.

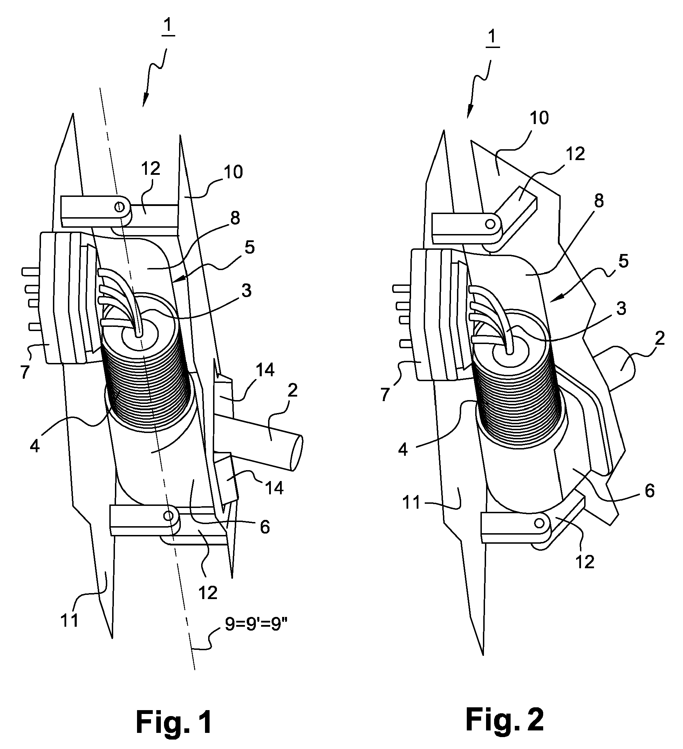

Die Anordnung 1 befindet sich im Gebrauch in dem Freiraum oder Zwischenraum zwischen der Karosserie und der Tür eines Fahrzeugs. Dies ist schematisch in den Fig. 1 und 2 gezeigt. Die Wände von Tür und Karosserie sind bei den Bezugszeichen 10 und 11 schematisch dargestellt. Die Tür ist schwenkbar mit der Karosserie verbunden, und zwar über die beispielhaft dargestellten Scharniere 12. Die Tür kann aus der Ruhe- oder Schließstellung (Fig. 1) in die Offenstellung (Fig. 2) um ihre Drehachse 9' geschwenkt werden. Die Anordnung 1 ist zwischen den Scharnieren 12 als Drehpunkten so angeordnet, daß die Leitungen 3 vertikal zwischen der Tür und der Karosserie verlaufen.

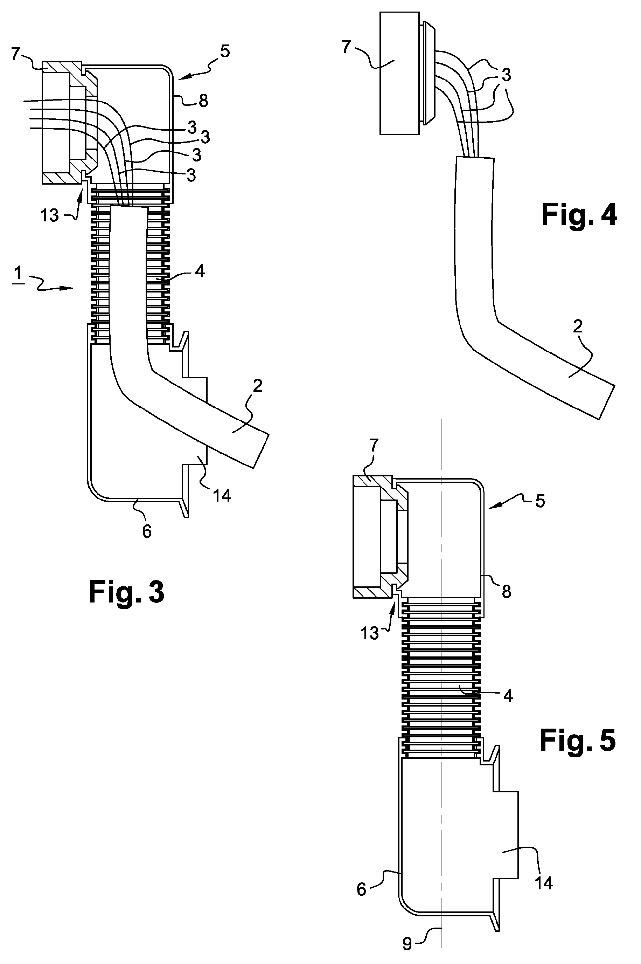

Die Anordnung 1 weist einen von einem Schutzelement umgebenen Kabelsatz 2 auf. In Fig. 3 ist die Anordnung 1 in einem Längsschnitt dargestellt. Fig. 4 zeigt den mit einem Durchtrittsteil 7 versehenen Kabelsatz 2 gesondert zur besseren Übersicht. Der Kabelsatz 2 ist hauptsächlich als kompaktes Element dargestellt, besteht aber aus einer Anzahl von einzelnen elektrischen Leitungen 3. Die Leitungen 3 können lose nebeneinander
liegen oder beispielsweise mittels Kabelbindern oder Wickelband zusammengehalten werden. In den Fig. 1 bis 4 sind vier Leitungen 3 dargestellt. Die Anzahl der Leitungen 3 entspricht der Anzahl der elektrischen Geräte, welche in der Tür des Fahrzeugs angebracht sind und mit einer Zentraleinheit in der Karosserie verbunden werden müssen. Die prinzipiell bekannten und daher nicht näher dargestellten einzelnen Leitungen 3 bestehen jeweils aus einem von einer Isolierung umgebenen elektrischen Leiter. Das Leitermaterial ist beispielsweise Aluminium.

Das Schutzelement, welches in Fig. 5 zur besseren Übersicht gesondert dargestellt ist, besteht in dem dargestellten Ausführungsbeispiel aus einem mit einer Wellung versehenen Schlauch 4, welcher den Kabelsatz 2 umgibt, sowie aus an den Enden des Schlauchs 4 mediendicht angebrachten Dichtelementen 5 und 6. Der Schlauch 4 kann auch glatt oder anderweitig strukturiert sein. Er umgibt den Kabelsatz 2 mit Vorteil relativ dicht, so daß der Schlauch 4 an den äußeren Leitungen 3 des Kabelsatzes 2 anliegt, die daher in dem Schlauch 4 nicht radial ausweichen können. Ein Dichtelement 5 bzw. 6 wird jeweils an der Karosserie und an der Tür des Fahrzeugs angebracht. Es erlaubt die mediendichte Durchführung des Kabelsatzes 2 durch eine Wand der Karosserie bzw. der Tür. Dies ist aus den Fig. 1 und 2 ersichtlich.

Das erste Dichtelement 5 besteht in dem dargestellten Ausführungsbeispiel aus dem Durchtrittsteil 7 und einem ersten Winkelelement 8. Das Durchtrittsteil 7, durch welches die vier Leitungen 3 hindurchtreten, ist mediendicht mit dem ersten Dichtelement 5 verbunden. Die Verbindung besteht beispielsweise aus einer Rastverbindung 13, wie in Fig. 3 dargstellt. Das erste Winkelelement 8 ist in den Fig. 1 und 2 zur besseren Übersicht transparent dargestellt. Das zweite Dichtelement 6 ist ein zweites Winkelelement. Das Durchtrittsteil 7 und das zweite Winkelelement führen den Kabelsatz 2 durch die Wand der Tür und die Wand der Karosserie hindurch. Die Dichtelemente 5 und 6 und der Schlauch 4 bestehen beispielsweise aus Kunststoff oder Gummi bzw. Silikon.

In dem dargestellten Ausführungsbeispiel dient das Durchtrittsteil 7 sowohl zur Festlegung des Kabelsatzes 2 als auch zur Abdichtung desselben beim Übergang zwischen Karosserie und Tür. Das Durchtrittsteil 7 ist so gestaltet, daß sein Innendurchmesser ungefähr dem Durchmesser des Kabelsatzes 2 entspricht. Dies trägt dazu bei, daß der Kabelsatz 2 beim Öffnen und Schließen der Tür keinen Druck- und Zugbelastungen ausgesetzt ist.

Es wird wieder Bezug auf die Fig. 1 und 2 genommen. Die Anordnung 1 ist so montiert, daß die Hauptachse 9 des Schutzelements sowie die Mittelachse 9" des Kabelsatzes 2, die seiner neutralen Faser entspricht, mit der Drehachse 9' der Tür übereinstimmen. In dem gezeigten Ausführungsbeispiel ist die Anordnung 1 zwischen den Scharnieren 12 angeordnet. Die Strecke, in der die Mittelachse 9" des Kabelsatzes 2 und die Hauptachse 9 des Schutzelements mit der Drehachse übereinstimmen, ist relativ lang im Verhältnis zu der radialen Abmessung des Kabelsatzes 2. Das erste Dichtelement 5, bestehend aus dem Durchtrittsteil 7 und dem ersten Winkelelement 8, ist in einer Bohrung in der Wand 11 der Karosserie festgelegt, indem das Durchtrittsteil 7 beispielsweise in eine Bohrung in der Wand 11 gedrückt wird. Das zweite Dichtelement 6 ist in einer Bohrung in der Wand 10 der Tür befestigt, und zwar mittels an dem Dichtelement 6 vorhandener Rastelemente 14.

Wie aus den Fig. 1 und 2 hervorgeht, wird der Kabelsatz 2 während des Öffnens der Tür nicht verbogen, sondern lediglich geringfügig verdreht (tordiert). Dasselbe gilt für den Schlauch 4 des Schutzelements. Der Kabelsatz 2 wird in dem Schutzelement geführt und ist deshalb örtlich fixiert. Durch die Winkelelemente 6 und 8 wird der Kabelsatz 2 an zwei Stellen um etwa einen rechten Winkel verbogen. Der Kabelsatz 2 wird damit axial festgelegt, womit verhindert wird, daß der Kabelsatz 2 beim Öffnen und Schließen der Tür gezogen oder gestaucht wird. Er ist sowohl an der Tür als auch an der Karosserie des Fahrzeugs mittels eines Kupplungselements lösbar befestigt.

Das Schutzelement der Anordnung 1 kann auch zwei identische Dichtelemente aufweisen. Beispielsweise können jeweils beide Dichtelemente wie das erste oder wie das zweite der oben beschriebenen Dichtelemente 5 und 6 gestaltet sein. Die Festlegung des Kabelsatzes 2 in dem Schutzelement erfolgt durch die Geometrie desselben, wie oben beschrieben.

## Patentansprüche

1. Verfahren zum Montieren einer Anordnung (1) zwischen der Karosserie und einer Tür eines Kraftfahrzeugs, mit welcher in der Tür angebrachte elektrische Elemente mit einer in der Karosserie des Kraftfahrzeugs angebrachten Zentraleinheit elektrisch leitend verbunden werden, wobei die Tür um eine durch mindestens zwei Drehpunkte (12) bestimmte Drehachse (9') schwenkbar an der Karosserie befestigt ist, bei welchem eine Anordnung verwendet wird, in der eine Anzahl von elektrischen Leitungen (3) zu einem Kabelsatz (2) zusammengefaßt ist, der von einem Schutzelement umgeben ist und mit geradlinigem Verlauf im Bereich zwischen den zwei Drehpunkten (12) so angeordnet wird, dass die Mittelachse (9") des Kabelsatzes (2) zumindest annähernd mit der Drehachse (9') der Tür übereinstimmt, **dadurch gekennzeichnet,**
- **dass** als Schutzelement ein Schlauch (4) um den Kabelsatz (2) herum festgelegt angeordnet wird, welcher den Kabelsatz (2) an diesem anliegend umgibt und welcher an seinem einen Ende ein aus einem Durchtrittsteil (7) und einem Winkelelement (8) bestehendes Dichtelement (5) aufweist, welches mediendicht in einer in einer Wand (11) der Karosserie vorhandenen Bohrung festgelegt wird, und welcher an seinem anderen Ende ein Dichtelement (6) hat, das mittels an demselben angebrachter Rastelemente (14) in einer in einer Wand (10) der Tür vorhandenen Bohrung befestigt wird, und
- **dass** der Kabelsatz (2) mittels eines als Stecker bzw. Buchse ausgeführten Kupplungselements lösbar an der Tür und an der Karosserie befestigt wird.

## Claims

1. A method for mounting an arrangement (1) between the body and a door of a motor vehicle, with which electrical elements attached in the door are connected electrically conductively with a central unit attached in the body of the motor vehicle, wherein the door is fastened to the body pivoted about an axis of rotation (9') determined by at least two pivot points (12), in which body an arrangement is used, in which a number of electrical lines (3) is combined into one cable set (2), which is surrounded by a protective element and is arranged with a linear course in the area between the two pivot points (12) so that the central axis (9') of the cable set (2) accords at least approximately with the axis of rotation (9') of the door, **characterized in**
- **that** a hose (4) as a protective element is arranged set about the cable set (2), which surrounds the cable set (2) abutting against the latter and which on its one end has a sealing element (5) consisting of a passage part (7) and an angle element (8), which is set media-tight in a borehole present in a wall (11) of the body and which on its other end has a sealing element (6), which by means of latching element(14) attached to the same is fastened in a borehole present in a wall (10) of the door, and
- **that** the cable set (2) is fastened detachably by means of a coupling element designed as a plug or socket to the door and to the body.

## Revendications

1. Procédé de montage d'un dispositif (1) entre la carrosserie et une portière d'un véhicule à moteur, avec lequel des éléments électriques insérés dans la portière sont reliés, avec une conduction électrique, avec une unité centrale montée dans la carrosserie du véhicule à moteur, la portière étant fixée de manière pivotante autour d'un axe de rotation (9') déterminé par au moins deux points de rotation (12), dans lequel un dispositif est utilisé, dans lequel un nombre de lignes électriques (3) sont regroupées en un ensemble de câbles (2) qui est entouré par un élément protecteur et est disposé avec une extension linéaire dans la zone entre les deux points de rotation (12) de façon à ce que l'axe central (9") de l'ensemble de câbles (2) coïncide au moins approximativement avec l'axe de rotation (9') de la portière, **caractérisé en ce que**
- en tant qu'élément protecteur, une gaine (4) est disposée autour de l'ensemble de câbles (2), qui entoure l'ensemble de câbles (2) en s'appuyant sur celui-ci et qui comprend, au niveau de son extrémité, un élément d'étanchéité (5) constitué d'une partie de passage (7) et d'un élément angulaire (8), qui est fixé, de manière étanche aux fluides dans un alésage existant dans une paroi (11) de la carrosserie et qui comprend, au niveau de son autre extrémité, un élément d'étanchéité (6), qui est fixé au moyen d'éléments d'encliquetage (14) montés sur celui-ci dans un alésage existant dans une paroi (10) de la portière et
- l'ensemble de câbles (2) est fixé, au moyen d'un élément de couplage conçu comme une prise mâle ou une prise femelle, de manière amovible à la portière et à la carrosserie.
